# FASCICULE DE BREVET EUROPEEN

(11) **EP 0 826 895 B1**
(45) Date de publication et mention de la délivrance du brevet: **27.03.2002**
(21) Numéro de dépôt: 97401855.8
(22) Date de dépôt: 01.08.1997
(51) Int. Cl.: F16D 65/12

(54) **Disque de frein ventilé à nervures de guidage**
Belüftete Bremsscheibe mit Führungsrippen
Ventilated brake disc with quide ribs

(30) Priorité: 30.08.1996 FR 9610608
(43) Date de publication de la demande: 04.03.1998
(73) Titulaire: RENAULT VEHICULES INDUSTRIELS, 69800 Saint Priest (FR)
(72) Inventeur: Berthaud, Jean, 38790 Saint Georges d'Esperanche (FR); Velard, Pierre, 69110 Saint Foy Les Lyon (FR)
(74) Mandataire: Palix, Stéphane

(56) Documents cités:
- DE-A- 4 220 728
- US-A- 2 464 754
- US-A- 3 394 780

## Description

La présente invention concerne un disque de frein ventilé, notamment pour véhicule routier, comportant un moyeu destiné à être fixé sur la pièce à freiner et deux couronnes annulaires coaxiales, reliées entre elles par des nervures délimitant des conduits de refroidissement.

Les disques de frein comportent de façon classique deux pistes de frottement raccordées à un moyeu fixé sur la pièce à freiner. L'augmentation des puissances de freinage requises sur certains véhicules routiers, tels que les véhicules industriels, conduit à optimiser les capacités de refroidissement des disques de frein, notamment au niveau de leurs pistes de frottement.

Par la publication US-3 394 780, on connaît un disque de frein ventilé comportant deux couronnes espacées coaxiales, qui portent une piste de frottement sur leurs surfaces externes, et sont ventilées par un flux d'air circulant entre leurs surfaces en regard.

Une des couronnes de ce disque de frein est raccordée au moyeu sur sa circonférence intérieure, et reliée à l'autre couronne par un ensemble de nervures droites, inclinées par rapport aux rayons du disque, de façon à faciliter l'aspiration de l'air au niveau de la circonférence intérieure des couronnes lorsque le disque tourne dans un sens opposé à l'orientation des nervures.

Cette disposition vise à faciliter l'expulsion de l'air à l'extérieur des couronnes. Cependant, elle privilégie le refroidissement du disque dans un sens de rotation particulier de celui-ci, introduisant de fait une spécification entre des disques de frein pour roue gauche ou pour roue droite de véhicule.

La présente invention a pour but d'optimiser les échanges thermiques au niveau des couronnes d'un disque de frein ventilé.

Elle concerne un disque de frein ventilé notamment pour véhicule routier, comportant un moyeu de fixation sur la pièce à freiner, une première couronne annulaire raccordée par sa circonférence intérieure au moyeu, et une seconde couronne annulaire coaxiale à la première, reliée à celle-ci par un ensemble de nervures. Ce disque est caractérisé en ce que les nervures définissent deux conduits symétriques de ventilation forcée en forme de spirale.

Le tracé de ce conduit permet à un flux d'air aspiré au niveau de leurs circonférences intérieures, de balayer leurs surfaces en regard.

Ce balayage est assuré dans les mêmes conditions dans les deux sens de rotation du disque.

Selon une disposition particulière, les nervures ont un tracé en spirale.

D'autres caractéristiques et avantages de l'invention apparaîtront clairement à la lecture de la description suivante d'un mode de réalisation particulier de celle-ci, en liaison avec les dessins annexés, sur lesquels :

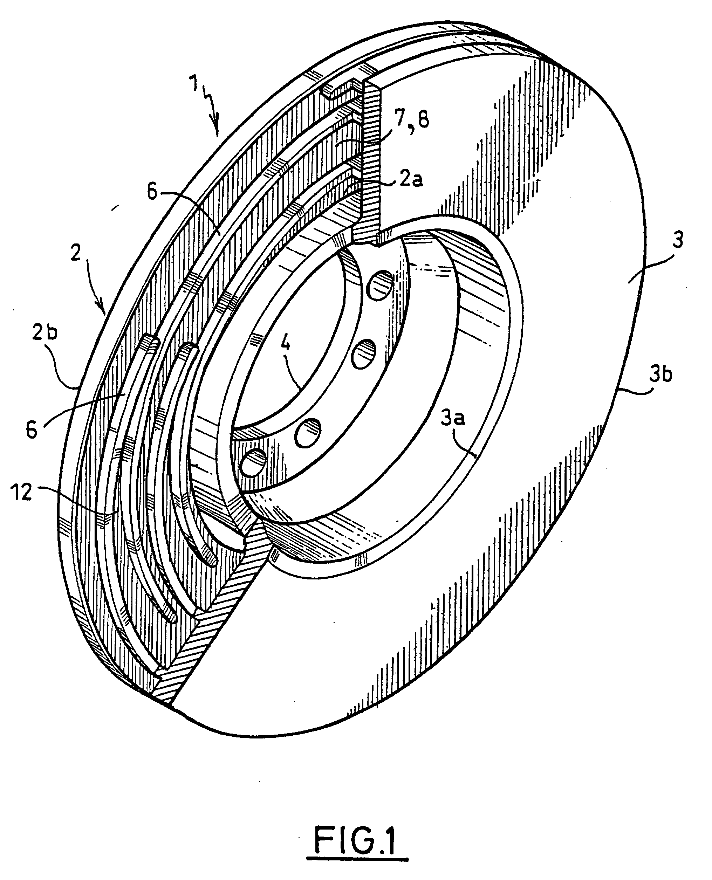

- la figure 1 est une vue en perspective partiellement éclatée du disque de frein proposé, et
- la figure 2 est une vue de face d'une couronne de ce disque.

Le disque de frein ventilé 1 représenté sur les figures comporte deux couronnes annulaires 2, 3, dont la première 2 est raccordée au niveau de sa circonférence intérieure 2a, au moyeu de fixation 4 du disque 1 sur une pièce à freiner (non représentée), telle qu'un axe de roue de véhicule. Entre les deux couronnes 2, 3 apparaissent les nervures 6 du disque, assurant de façon classique la liaison de la seconde couronne 3 sur la première, et le guidage de l'air de refroidissement entre celles-ci.

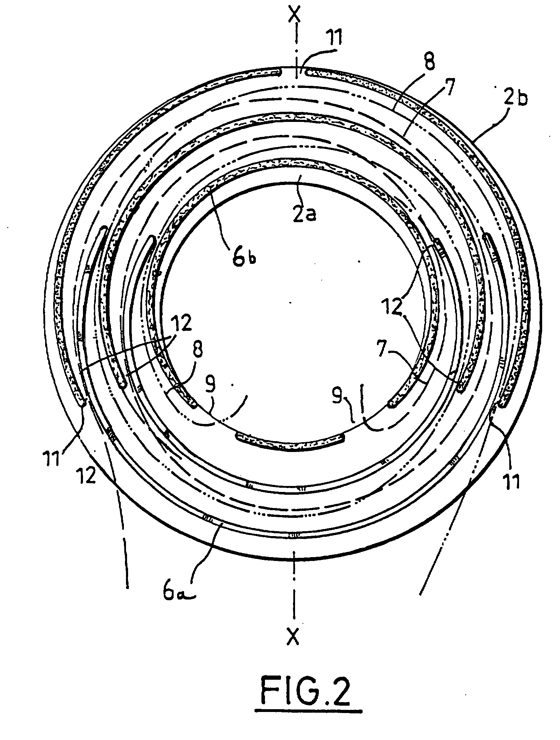

Conformément à l'invention, le disque 1 comporte deux conduits principaux de ventilation forcée 7, 8 mis en évidence sur la figure 2, qui aspirent un flux d'air par des orifices d'entrée d'air 9, ménagés dans les nervures 6 au niveau de la circonférence intérieure 2a, 3a des couronnes 2, 3. Ces deux conduits sont destinés à guider le flux d'air entre les deux couronnes en lui faisant balayer les surfaces en regard des couronnes, de façon à optimiser ses échanges thermiques avec celles-ci avant qu'il soit expulsé par un ou plusieurs orifices de sortie 11 ménagés dans les nervures 6 à la périphérie du disque.

La figure 2 montre que les deux conduits 7, 8 ont le même tracé général en forme de spirale, mais se déroulent en sens opposé à partir de la circonférence intérieure des disques 2a, 3a, de sorte que le flux d'air aspiré par les ouvertures centrales 9 est entraîné dans l'un ou l'autre de ces conduits 7, 8, selon le sens de rotation du disque 1, donc de la roue sur laquelle celui-ci est fixé.

Pour obtenir un tel double conduit en spirale 7, 8 entre les couronnes 2, 3, l'invention propose de faire suivre aux nervures 6 elles-mêmes, deux spirales symétriques 6a, 6b se déroulant en sens opposé. Les . spirales 6a, 6b des nervures 6, présentent à leurs intersections des ouvertures 12 permettant au flux d'air de traverser celles-ci, de sorte qu'elles constituent alternativement la piste de guidage intérieure et la piste de guidage extérieure du flux d'air entre les couronnes 2, 3. Comme le montre la figure, le tracé des nervures est parfaitement symétrique par rapport à un diamètre X, X', placé arbitrairement en position verticale sur celle-ci, de sorte que cette alternance se produit de façon analogue le long des deux conduits principaux 7, 8 mentionnés ci-dessus, et que le guidage du flux d'air entre les couronnes 2, 3, s'effectue dans les mêmes conditions quel que soit le sens de rotation du disque.

En conclusion, les dispositions proposées par l'invention permettent d'optimiser les échanges thermiques dans un frein à disque ventilé, en disposant, à l'intérieur de celui-ci, de conduits de ventilation forcée de grande longueur, sans pour autant contraindre les constructeurs à différencier des disques de frein pour roue droite, et des disques de frein pour roue gauche. Enfin, il faut noter qu'une disposition judicieuse des orifices de sortie d'air à l'extérieur des couronnes peut être mise à profit pour équilibrer le disque.

## Revendications

1. Disque de frein ventilé (1), notamment pour véhicule routier, comportant un moyeu de fixation (4), sur la pièce à freiner, une première couronne annulaire (2) raccordée par sa circonférence intérieure (2a) au moyeu (4), et une seconde couronne annulaire (3) coaxiale à la première, reliée à celle-ci par un ensemble de nervures (6), **caractérisé en ce que** les nervures (6) définissent deux conduits symétriques de ventilation forcée (7, 8) en forme de spirale.

2. Disque de frein selon la revendication 1, **caractérisé en ce que** les nervures (6) ont un tracé en spirale.

3. Disque de frein selon la revendication 2, **caractérisé en ce que** les nervures (6) suivent de façon interrompue deux spirales symétriques (6a, 6b).

4. Disque de frein selon la revendication 3, **caractérisé en ce que** les nervures (6) présentent des ouvertures (12) au niveau de chaque intersection de leurs deux spirales (6a, 6b).

5. Disque de frein selon l'une des revendications 1 à 4, **caractérisé en ce que** les nervures délimitent des orifices d'évacuation d'air (11), sur la circonférence extérieure des couronnes.

6. Disque de frein selon la revendication 5, **caractérisé en ce que** les orifices (11) assurent l'équilibrage du disque (1).

## Patentansprüche

1. Belüftete Bremsscheibe (1), insbesondere für Straßenfahrzeuge, mit einer Nabe (4) zur Befestigung auf dem zu bremsenden Teil, einem ersten ringförmigen Kranz (2), der über seinen inneren Umfang (2a) mit der Nabe (4) verbunden ist, und einem zweiten, zum ersten koaxialen ringförmigen Kranz (3), der mit diesem über eine Anordnung von Rippen (6) verbunden ist, **dadurch gekennzeichnet, daß** die Rippen (6) zwei symmetrische Zwangslüftungskanäle (7,8) in Spiralform bilden.

2. Bremsscheibe nach Anspruch 1, **dadurch gekennzeichnet, daß** die Rippen (6) einen spiralförmigen Grundriß haben.

3. Bremsscheibe nach Anspruch 2, **dadurch gekennzeichnet, daß** die Rippen (6) in unterbrochener Weise zwei symmetrischen Spiralen (6a, 6b) folgen.

4. Bremsscheibe nach Anspruch 3, **dadurch gekennzeichnet, daß** die Rippen (6) Öffnungen (12) im Bereich jeder Kreuzungsstelle ihrer zwei Spiralen (6a, 6b) aufweisen.

5. Bremsscheibe nach einem der Ansprüche 1 bis 4, **dadurch gekennzeichnet, daß** die Rippen Luftauslaßöffnungen (11) an dem äußeren Umfang der Kränze begrenzen.

6. Bremsscheibe nach Anspruch 5, **dadurch gekennzeichnet, daß** die Öffnungen (11) das Auswuchten der Scheibe (1) sicherstellen.

## Claims

1. Ventilated brake disc (1), particularly for a road vehicle, comprising a hub (4) for securing, to the part that is to be braked, a first angular ring (2) connected by its interior circumference (2a) to the hub (4), and a second annular ring (3) coaxial with the first and connected to the latter by a set of ribs (6), **characterized in that** the ribs (6) define two symmetric forced-ventilation ducts (7, 8) in the shape of a spiral.

2. Brake disc according to Claim 1, **characterized in that** the ribs (6) have the line of a spiral.

3. Brake disc according to Claim 2, **characterized in that** the ribs (6) interruptedly follow two symmetric spirals (6a, 6b).

4. Brake disc according to Claim 3, **characterized in that** the ribs (6) have openings (12) at each intersection of their two spirals (6a, 6b).

5. Brake disc according to one of Claims 1 to 4, **characterized in that** the ribs delimit air outlet orifices (11) on the exterior circumference of the rings.

6. Brake disc according to Claim 5, **characterized in that** the orifices (11) balance the disc (1).
